# EUROPÄISCHE PATENTANMELDUNG

(11) **EP 2 040 013 A2**
(43) Veröffentlichungstag der Anmeldung: **25.03.2009**
(21) Anmeldenummer: 08016167.2
(22) Anmeldetag: 13.09.2008
(51) Int. Cl.: F24J 2/20, F24J 2/46, F24D 11/00

(54) **Solaranlage und Solarkollektor mit Temperaturbegrenzer**

(30) Priorität: 18.09.2007 DE 102007044136
(71) Anmelder: Robert Bosch GmbH, 70442 Stuttgart (DE)
(72) Erfinder: Clement, Uwe, 73114 Schlat (DE); Stumpp, Hermann, 73728 Esslingen (DE)

(57) **Zusammenfassung**

Die Erfindung betrifft einen Solarkollektor (1, 1') zum Erwärmen eines den Solarkollektor (1, 1') durchströmenden Solarfluids (5) nach dem Oberbegriff des Patentanspruches 1 und eine Solaranlage (20) mit einem erfindungsgemäßen Solarkollektor (1, 1') nach Anspruch 9.

Es ist eine Aufgabe der Erfindung, einen verbesserten Solarkollektor (1, 1') und eine verbesserte Solaranlage (20) zu schaffen, welche die Stagnationstemperatur auf einen vorgebbaren Wert begrenzt. Insbesondere ist es eine Aufgabe, die Stagnationstemperatur so zu begrenzen, dass Werkstoffe mit relativ niedrigen Schmelzpunkten als Kollektormaterial verwendbar sind.

Gekennzeichnet ist der Solarkollektor (1, 1') dadurch, dass Temperaturbegrenzungsmittel für eine Begrenzung einer Kollektortemperatur des Solarkollektors (1, 1') und/oder des Solarfluids (5) vorgesehen sind, wobei die Temperaturbegrenzungsmittel direkt an den Füllstand des mindestens einen Hohlraums (4, 6c) gekoppelt sind. Die Solaranlage (20) ist dadurch gekennzeichnet, dass diese mit einem erfindungsgemäßen Solarkollektor (1, 1'), einem mit dem Hohlraum (4, 6c) fluidisch verbundenem Leitungssystem (21), einem mit dem Leitungssystem (21) verbundenen Speicher (23) und einer Zuflusseinrichtung (22), um ein Solarfluid (5) entsprechend aus dem Solarkollektor (1, 1'), durch das Leitungssystem (21) und/oder in den Speicher (23) und umgekehrt zu fördern, ausgestattet ist.

## Beschreibung

Die Erfindung betrifft einen Solarkollektor zum Erwärmen eines den Solarkollektor durchströmenden Solarfluids nach dem Oberbegriff des Patentanspruches 1 und eine Solaranlage mit einem erfindungsgemäßen Solarkollektor nach Anspruch 9.

Allgemein bekannt sind Solarkollektoren, welche ein durch den Solarkollektor durchströmendes Fluid zur Wärmegewinnung erwärmen. Um diese Solarkollektoren und das Fluid zum Beispiel vor Frostschäden zu schützen, weisen derartige Solarkollektoren Mittel auf, mit welchen das Fluid bei Nichtgebrauch aus dem Solarkollektor abgeführt und bei Bedarf wieder zugeführt werden kann. Das Verfahren zum Entleeren und Wiederbefüllen derartiger Solarkollektoren wird auch als Drain-Back-Verfahren bezeichnet.

Derartige Solarkollektoren sind zum Beispiel aus der DE 195 15 580 A1, der DE 43 38 604 A1, der DE 28 39 258 A1, der DE 28 37 565 A1, der DE 30 21 422 A1, der DE 43 18 480 A1, der DE 38 35 012 A1, der DE 26 14 142 A1 und der DE 196 54 037 C1 bekannt.

Allgemein wird in derartigen thermischen Solarkollektoren das durchströmende Kollektor- oder Solarfluid durch die einfallende Solarstrahlung erwärmt. Je effektiver ein Solarkollektor die Solarstrahlung in Wärmeenergie umwandelt, umso höher liegt in der Regel die Temperatur in einem Stagnationsfall. Hierbei sind die Wärmeverluste, welche an die Umgebung abgegeben werden etwa genauso groß wie die eingestrahlte Sonnenenergie. Die Temperatur im Stagnationsfall liegt bei gängigen Flachkollektoren, hohen Außenlufttemperaturen und maximaler Solarstrahlung üblicherweise zwischen 180°C und 230°C. Auf diesem Temperaturniveau kann die Solarenergie nicht mehr genutzt werden, da die Solarkreispumpe bei üblicherweise 90°C aus Sicherheitsgründen abschaltet und somit keine Wärme mehr in den Solarspeicher gefördert wird. Derartig hohe Temperaturen, wie sie im Stagnationsfall auftreten, sind somit nicht mehr effektiv nutzbar. Vielmehr wirkend diese hohen Temperaturen sich schädlich auf den Solarkollektor bzw. die Solaranlage aus. Kollektormaterialien und Kollektorfluid müssen für diese hohen Temperaturen ausgelegt werden, sind somit kosten- und arbeitsintensiv und verschleißen schneller. Das Kollektorfluid, welches üblicherweise eine Wasser-Glykol-Mischung umfasst, beginnt sich bei hohen Temperaturen zu zersetzen. Bei Drain-Back-Systemen wird der Solarkollektor von dem Solarfluid entleert, sobald die Solarkreispumpe abgeschaltet wird. Auf diese Weise werden das Solarfluid und der Solarkollektor geschützt.

Der Erfindung liegt die Aufgabe zugrunde, einen verbesserten Solarkollektor und eine verbesserte Solaranlage zu schaffen, welche die Stagnationstemperatur auf einen vorgebbaren Wert begrenzt. Insbesondere ist es eine Aufgabe, die Stagnationstemperatur so zu begrenzen, dass Werkstoffe mit relativ niedrigen Schmelzpunkten als Kollektormaterial verwendbar sind.

Erfindungsgemäß wird dies mit den Merkmalen der Patentansprüche 1 und 9 gelöst. Vorteilhafte Weiterbildungen sind den Unteransprüchen zu entnehmen.

Der Solarkollektor, insbesondere ein thermischer Solarkollektor, zum Erwärmen eines den Solarkollektor durchströmenden Solarfluids, mit mindestens einer Solarstrahlungsdurchtrittseinrichtung, einer Kollektorbodeneinheit und mindestens einem zwischen Solarstrahlungsdurchtrittseinrichtung und Kollektorbodeneinheit angeordneten Hohlraum, der von dem Solarfluid durchströmbar ist und in welchen Solarstrahlung durch die Solarstrahlungsdurchtrittseinrichtung durchtreten und das dort vorhandene Solarfluid erwärmen kann, wobei der Hohlraum je nach Anwendungsfall über eine Zuflusseinrichtung zumindest teilweise von dem Solarfluid durchströmbar ist oder frei von Solarfluid ist und so ein Füllstand des Hohlraums definiert, ist dadurch gekennzeichnet, dass Temperaturbegrenzungsmittel für eine Begrenzung einer Kollektortemperatur des Solarkollektors und/oder des Solarfluids vorgesehen sind, wobei die Temperaturbegrenzungsmittel direkt mit dem Füllstand des mindestens einen Hohlraums gekoppelt sind.

Bevorzugt umfassen die Temperaturbegrenzungsmittel mindestens eine Reflexionsschicht, um nicht benötigte Solarstrahlung zumindest teilweise aus dem Hohlraum zu reflektieren.

In einer Ausführungsform ist die Reflexionsschicht in eine Einfallsrichtung der Solarstrahlung hinter dem Hohlraum benachbart dazu angeordnet, um die Solarstrahlung in Abhängigkeit von dem Füllstand des Hohlraums unterschiedlich stark zu reflektieren bzw. zu absorbieren.

In einer weiteren Ausführungsform umfasst die Solarstrahlungsdurchtrittseinrichtung mindestens eine Solardurchtrittsschicht, welche für Solarstrahlung im Wesentlichen durchlässig ist, um eine Solarstrahlung in die Einfallsrichtung der Solarstrahlung durchzulassen.

Ein anderes Ausführungsbeispiel sieht vor, dass die Solarstrahlungsdurchtrittseinrichtung mindestens eine wärmeundurchlässige Schicht umfasst, welche für eine Wärmestrahlung im Wesentlichen undurchlässig ist, um die Wärmestrahlung, welche beim Erwärmen des Solarfluids entstehen kann, im Wesentlichen nicht aus dem Solarkollektor zu lassen.

Eine erste Variante sieht vor, dass die Temperaturbegrenzungsmittel mindestens einen von einem Solarfluid durchströmbaren zweiten Hohlraum in der Solarstrahlungsdurchtrittseinrichtung umfassen, welcher zwischen der Solardurchtrittsschicht und der wärmeundurchlässigen Schicht angeordnet ist, so dass abhängig von einem Füllstand des zweiten Hohlraums die einfallende Solarstrahlung unterschiedlich stark reflektiert wird. Bei dieser ersten Variante ist der zweite Hohlraum mit dem ersten Hohlraum fluidisch verbindbar und es handelt sich in beiden Hohlräumen um ein und dasselbe Medium, nämlich Solarfluid.

Dagegen umfassen die Temperaturbegrenzungsmittel bei einer zweiten Variante mindestens einen mit einer zweiten Flüssigkeit befüllbaren zweiten Hohlraum in der Solarstrahlungsdurchtrittseinrichtung, welcher ebenfalls zwischen der Solardurchtrittsschicht und der wärmeundurchlässigen Schicht angeordnet ist, aber fluidisch völlig unabhängig vom ersten Hohlraum ist. Auch dabei wird abhängig vom Füllstand des zweiten Hohlraums die einfallende Solarstrahlung unterschiedlich stark reflektiert. Die zweite Flüssigkeit befindet sich in diesem Fall in einem kleinen, in den Solarkollektor integrierten Speicher, welcher mit dem zweiten Hohlraum verbindbar und im unteren Bereich des Solarkollektors angeordnet ist. Beim Fördern des Solarfluids durch den ersten Hohlraum tritt auch die zweite Flüssigkeit aus dem Speicher aus und füllt den zweiten Hohlraum. Gesteuert werden das Austreten der zweiten Flüssigkeit aus dem Speicher und das Füllen des zweiten Hohlraumes wahlweise durch die Druckdifferenz beim Fördern des Solarfluids durch den ersten Hohlraum, durch Kapillarwirkung im zweiten Hohlraum und/oder mit Hilfe einer Pumpe.

Weiterhin kann vorgesehen werden, dass die Schichten so angeordnet sind, dass bei niedrigerem Füllstand mindestens eines Hohlraums mehr Solarstrahlung durch die mindestens eine Reflexionsschicht reflektiert und weniger Wärmestrahlung durch das Solarfluid absorbiert wird, als bei einem höheren Füllstand des entsprechenden Hohlraums.

Die Solaranlage ist dadurch gekennzeichnet, dass diese mit einem erfindungsgemäßen Solarkollektor, einem mit dem Hohlraum fluidisch verbundenem Leitungssystem, einem mit dem Leitungssystem verbundenen Speicher und einer Zuflusseinrichtung, um ein Solarfluid entsprechend aus dem Solarkollektor durch das Leitungssystem und/oder in den Speicher und umgekehrt zu fördern, ausgestattet ist.

Außerdem kann vorgesehen sein, dass die Solaranlage ausgebildet ist, um ein Drain-Back-Verfahren und eine Temperaturbegrenzung, insbesondere ohne Einsatz elektrischer Energie, durchzuführen. Bei der Variante mit einer zweiten Flüssigkeit im zweiten Hohlraum wäre dieser Drain-Back-Effekt dann nicht auf den gesamten Kreislauf des Solarfluids bezogen, sondern nur auf den zweiten, der Sonne zugewandten Hohlraum und den damit verbindbaren, kleinen Speicherbehälter.

Dadurch, dass die Solaranlage gemäß einem Drain-Back-System mit einem erfindungsgemäßen Solarkollektor ausgebildet ist, ist eine Temperaturbegrenzung realisiert. Im gefüllten Zustand absorbiert der Solarkollektor die Solarstrahlung direkt in dem Solarfluid. Im entleerten Zustand wird nur wenig oder keine Solarstrahlung absorbiert. Durch die Temperaturbegrenzungsmittel ist die Absorption und damit die Temperaturentstehung in dem Solarkollektor an den Füllstand des Solarfluids in dem Solarkollektor gekoppelt. Durch entsprechende Schichten, wie eine schwach absorbierende, stark reflektierende oder streuende Schicht, wird bei niedrigerem Füllstand mehr Solarstrahlung wieder zurück an die Umgebung abgegeben, ohne dass diese im Solarkollektor in Wärme umgewandelt wird. Auf diese Weise lässt sich bei gleicher Effizienz gegenüber dem Stand der Technik eine deutlich geringere Temperatur in dem Solarkollektor einstellen. Die Reflexionsschicht kann dabei fest in Einstrahlungsrichtung hinter dem Solarfluid ausgebildet sein. Das Solarfluid kann in einem Hohlraum angeordnet sein. Alternativ kann eine Art Bypasshohlraum dem Hohlraum vorgeschaltet sein. Die Hohlräume befinden sich zwischen der Solarstrahlungsdurchtrittseinrichtung und der Kollektorbodeneinheit. Umfasst sind damit alle zwischen den entsprechenden, von dem Solarkollektor nach außen weisenden Oberflächen der Komponenten. Somit sind auch die in dem Kollektorboden und die in der Solarstrahlungsdurchtritteinrichtung ausgebildeten Hohlräume unter "zwischen Solarstrahlungsdurchtrittseinrichtung und Kollektorbodeneinheit" umfasst. Die Temperaturbegrenzungsmittel erfordern keine zusätzliche Energiequellen. Abhängig von dem Füllstand des Solarfluids in dem Solarkollektor wirken die Temperaturbegrenzungsmittel anteilig.

Die Zeichnungen stellen mehrere Ausführungsbeispiele der Erfindung dar und zeigen in mehreren Figuren:
- Fig. 1: schematisch ein erstes Ausführungsbeispiel eines Solarkollektors einer Drain-Back-Solaranlage im gefüllten Zustand,
- Fig. 2: schematisch das erste Ausführungsbeispiel des Solarkollektors gemäß Fig. 1 im entleerten Zustand,
- Fig. 3: schematisch eine erfindungsgemäße Solaranlage gemäß einem Drain-Back-System im entleerten Zustand des Solarkollektors,
- Fig. 4: schematisch die erfindungsgemäße Solaranlage nach Fig. 3 im gefüllten Zustand des Solarkollektors,
- Fig. 5: ein zweites Ausführungsbeispiel eines Solarkollektors einer Drain-Back-Solaranlage im entleerten Zustand und
- Fig. 6: schematisch das zweite Ausführungsbeispiel des Solarkollektors gemäß Fig. 5 im gefüllten Zustand.

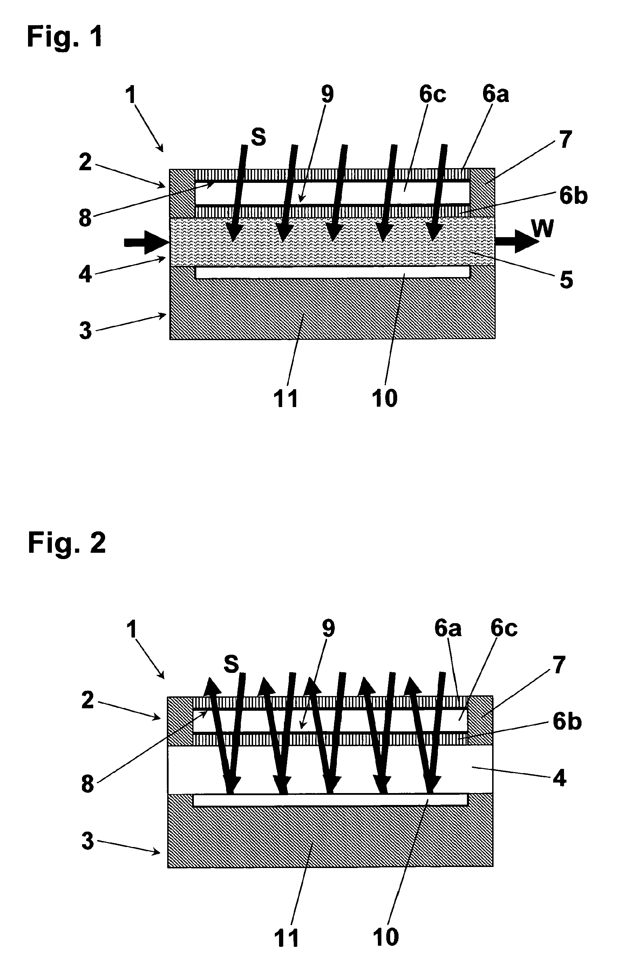

Fig. 1 zeigt schematisch ein erstes Ausführungsbeispiel eines Solarkollektors 1 einer Drain-Back-Solaranlage in einem gefüllten Zustand und Fig. 2 zeigt schematisch das erste Ausführungsbeispiel des Solarkollektors gemäß Fig. 1 in einem entleerten Zustand. Der Aufbau des Solarkollektors 1 ist für die Fig. 1 und die Fig. 2 gleich und wird hier für beide Fig. 1, 2 zusammen beschrieben.

Der Solarkollektor 1 weist eine Solarstrahlungsdurchtrittseinrichtung 2 und eine Kollektorbodeneinheit 3 auf. Zwischen der Solarstrahlungsdurchtrittseinrichtung 2 und der Kollektorbodeneinheit 3 ist ein Hohlraum 4 angeordnet, der in Fig. 1 mit einem Solarfluid 5 gefüllt ist, welches den Hohlraum 4 durchströmt, und in Fig. 2 frei von dem Solarfluid 5 ist. Die Solarstrahlungsdurchtrittseinrichtung 2 umfasst in dem dargestellten Ausführungsbeispiel zwei voneinander beabstandete, zueinander parallel angeordnete Scheiben 6, die in einer Halterung 7 angeordnet sind. Die erste Scheibe 6a der Scheiben 6 ist für Sonnenlicht oder Solarstrahlung S transparent. Dabei ist die erste Scheibe 6a als Solarstrahlungsdurchtrittsschicht ausgebildet. Die Solarstrahlungsdurchtrittsschicht 6a ist aus einem Material wie Solarglas, Polycarbonat und dergleichen. Bevorzugt ist die Solarstrahlungsdurchtrittsschicht 6a zumindest in eine Richtung, nämlich in Richtung der Umgebung, für Wärmestrahlung im Wesentlichen undurchlässig und/oder sie weist an der dem Hohlraum 4 zugewandten Seite eine für Wärmestrahlung im Wesentlichen undurchlässige Schicht 8 auf, um ungewollte Wärmeverluste an die Umgebung zu verringern und die Effizienz des Solarkollektors 1 zu steigern.

Die zweite Scheibe 6b ist ebenfalls für Solarstrahlung (dargestellt durch die geraden, schwarzen Pfeile) S durchlässig. In der hier dargestellten Form weist die zweite Scheibe 6b eine selektive Schicht 9 auf, deren Emissionsfähigkeit für Wärmestrahlung gering ist. Für kurzwellige Solarstrahlung S ist die Schicht 9 durchlässig. Zwischen den beiden Scheiben 6 ist zudem ein luftgefüllter zweiter Hohlraum 6c angeordnet, durch welchen die Solarstrahlung S hindurchlaufen kann.

Die zweite Scheibe 6b begrenzt auf einer Seite den Hohlraum 4. Im gefüllten Zustand ist die zweite Scheibe 6b in direktem Kontakt mit dem Solarfluid 5. Somit weist die zweite Scheibe 6b in diesem Zustand etwa die gleiche Temperatur wie das Solarfluid 5 auf. Das Material für die zweite Scheibe 6b weist zu diesem Zweck vorzugsweise geeignete Wärmeeigenschaften und Materialeigenschaften auf.

Der Kollektorboden 3 begrenzt den Hohlraum 4 auf der gegenüberliegenden Seite zur zweiten Scheibe 6b. Eine Oberseite des Kollektorbodens 3 weist eine Reflexionsschicht 10 auf, welche eine geringe oder im Wesentlichen keine Absorptionsfähigkeit in Bezug auf die Solarstrahlung aufweist. Diese Reflexionsschicht 10 kann zum Beispiel weiße Farbe umfassen. Der Kollektorboden 3 weist weiter eine Trägerplatte 11 für die Reflexionsschicht 10 auf. Diese kann einteilig mit der Halterung 7 der Solarstrahlungsdurchtrittseinrichtung 2 oder separat ausgebildet sein.

Der Solarkollektor 1 ist so konzipiert, dass die Solarstrahlung S direkt im Solarfluid 5 absorbiert und in Wärme W (dargestellt durch die gewellten, horizontalen Pfeile) umgewandelt wird, wenn der Solarkollektor 1 des Drain-Back-Systems bei Anlagenbetrieb gefüllt ist. Der Vorteil hiervon ist, dass das Kollektormaterial maximal auf die Temperaturen des Solarfluids 5 erhitzt werden kann. Die höchsten Temperaturen treten demnach im Solarfluid 5 auf. Die maximale Speichertemperatur des Solarfluids 5 liegt bei etwa 90°C und bildet eine obere Temperaturbegrenzung. Aufgrund dieser Temperaturbegrenzung werden während des Betriebes der Solaranlage die Wärmeverluste an die Umgebung verringert. Das Solarfluid 5 umfasst im Wesentlichen Wasser. Der im Wasser absorbierte Anteil der einfallenden Solarstrahlung S hängt von der Tiefe des Solarfluids 5 senkrecht zum Einfallswinkel der Solarstrahlung S ab. Um den Bauraum für das Solarfluid 5 gering zu halten, umfasst das Solarfluid 1 neben Wasser noch Zusatzstoffe, welche die Absorptionsfähigkeit des Solarfluids 1 erhöhen. Diese Zusatzstoffe umfassen beispielsweise Feststoffe, Feststoffpartikel etc.

Sobald die maximale Temperatur des Solarfluids 5 von etwa 90°C erreicht wird, schaltet die Solarkreispumpe ab. Das Solarfluid 5 in einem nicht dargestellten Kollektorkreis der Solaranlage fließt zurück auf ein Stillstandsniveau. In diesem Zustand ist der Solarkollektor 1 entleert. Einfallende Solarstrahlung S trifft nun direkt auf die Reflexionsschicht 10 des Kollektorbodens 3. Durch die geringe Absorptionsfähigkeit der Reflexionsschicht 10 wird die einfallende Solarstrahlung S nahezu komplett reflektiert bzw. nicht oder nur in einem sehr geringen Umfang absorbiert und in Wärme umgewandelt. Der größte Anteil der Solarstrahlung S wird bei unveränderter Wellenlänge reflektiert oder gestreut und sofort wieder durch die für die Solarstrahlung S durchlässigen Scheiben 2 an die Umgebung abgegeben. Auf diese Weise kann die Temperatur oder die Stagnationstemperatur des Solarkollektors 1 im Stillstand oder im entleerten Zustand deutlich reduziert oder begrenzt werden.

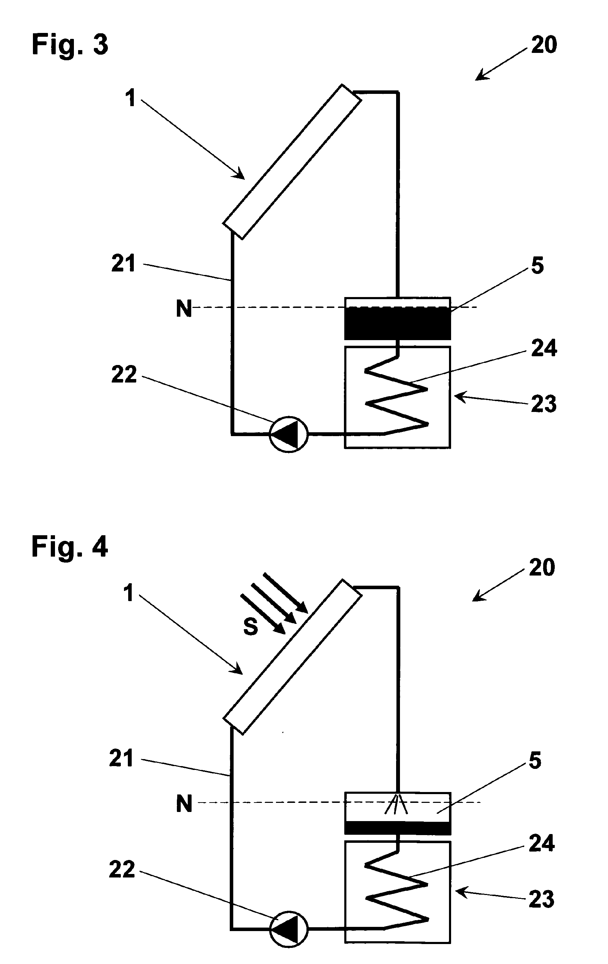

Fig. 3 zeigt schematisch eine erfindungsgemäße Solaranlage 20 gemäß einem Drain-Back-System in einem entleerten Zustand des Solarkollektors 1 und Fig. 4 zeigt schematisch eine erfindungsgemäße Solaranlage 20 gemäß einem Drain-Back-System in einem gefüllten Zustand des Solarkollektors 1.

Die Solaranlage 20 umfasst neben dem Solarkollektor 1 ein kreislaufartiges Leitungssystem 21 mit einer als Pumpe ausgebildeten Zuflusseinrichtung 22 und einem Speicher 23. In dem Speicher 23 ist eine Wärmenutzungseinheit 24 zum Verwenden der Wärme, die in dem Leitungssystem 21 über das Solarfluid 5 bereitgestellt ist, angeordnet. Die Wärmenutzungseinheit 24 ist beispielsweise ein Wärmetauscher, durch welchen Wärme an ein Heizungssystem oder dergleichen abgebbar ist. Durch eine gepunktete Linie N ist ein Stillstandsniveau eingezeichnet, in welchem der Solarkollektor 1 sich in einem entleerten Zustand befindet. Beispielsweise kann sich die Solaranlage nachts, wie durch den sichelförmig dargestellten Mond skizziert, in einem Stillstandsmodus befinden. Jedoch kann dieser Modus auch bei Erreichen einer Maximaltemperatur, beispielsweise der Maximaltemperatur des Solarfluids 1 eingeschaltet sein. Entsprechend ist in diesem Zustand der Solarkollektor 1 nicht mit Solarfluid 1 gefüllt und einfallende Solarstrahlung wird direkt an die Umgebung abgegeben, ohne dass im Wesentlichen Wärme in dem Solarkollektor erzeugt wird.

In Fig. 4 befindet sich die Solaranlage 20 in einem Betriebsmodus, in welchem der Solarkollektor 1 mit dem Solarfluid 5 gefüllt ist. In diesem Modus wird die einfallende Solarstrahlung S direkt in dem Solarfluid 5 absorbiert und in Wärme umgewandelt, welche dann über das Solarfluid 5 in den Speicher 23 geleitet und dort bereitgestellt wird.

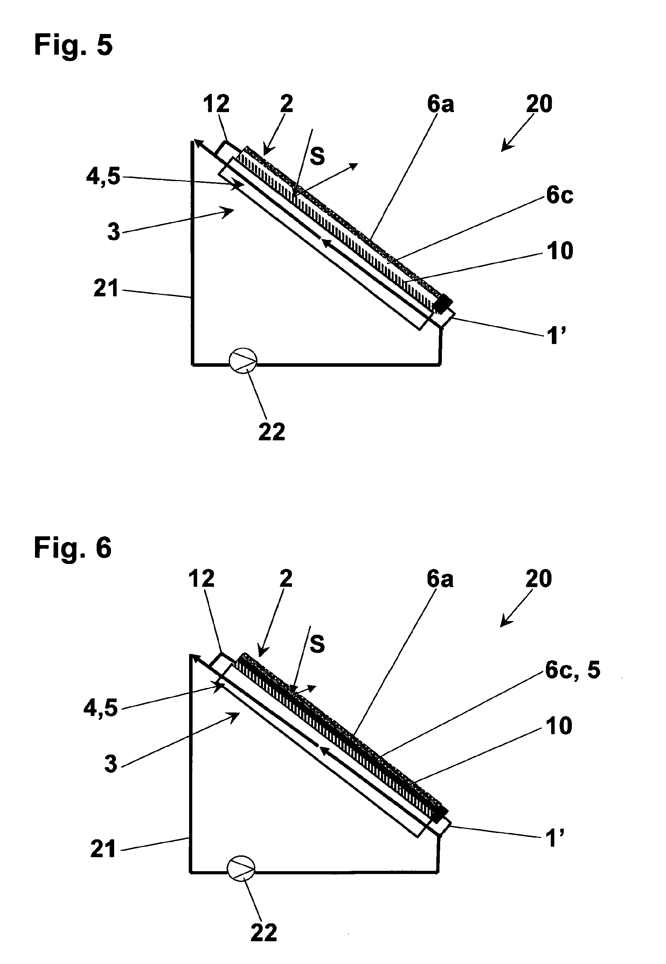

Fig. 5 zeigt ein zweites Ausführungsbeispiel eines Solarkollektors 1' einer Drain-Back-Solaranlage 20 in einem entleerten Zustand und Fig. 6 zeigt schematisch das zweite Ausführungsbeispiel des Solarkollektors 1' gemäß Fig. 5 in einem gefüllten Zustand. Der Solarkollektor 1' gleicht dem Solarkollektor 1 gemäß Fig. 1 und 2 und für gleiche oder ähnliche Bauteile werden gleiche oder ähnliche Bezugszeichen verwendet. Auf eine detaillierte Beschreibung dieser Bauteile wird verzichtet. Die Solaranlage 20 umfasst ein Leitungssystem 21 mit einer Pumpeneinheit 22 und einen nicht dargestellten Speicher. Eingebunden in das Leitungssystem 21 ist der Solarkollektor 1'. Der Solarkollektor **1'** umfasst eine Solarstrahlungsdurchtrittseinrichtung 2 und eine Kollektorbodeneinheit 3. Zwischen der Solarstrahlungsdurchtrittseinrichtung 2 und der Kollektorbodeneinheit 3 ist ein erster Hohlraum 4 und ein zweiter Hohlraum 6c ausgebildet, welche von einem durch die Pumpeneinheit 22 gefördertes Solarfluid 5 durchströmbar sind. Die Kollektorbodeneinheit 3 umfasst eine reflektierende oder schwach absorbierende Reflexionsschicht 10. Die Solarstrahlungsdurchtritteinrichtung 2 umfasst eine für Solarstrahlung S durchlässige Schicht 6a. Zwischen der Solarstrahlungsdurchtrittseinrichtung 2, genauer deren Oberseite, und der Kollektorbodeneinheit 3, genauer deren Unterseite, sind die beiden Hohlräume 4,6c angeordnet. Der zweite Hohlraum 6c ist über die Solaranlage 20 mit dem stark wärmeabsorbierenden Solarfluid 5 füllbar und durchströmbar. Dabei ist der zweite Hohlraum 6c hierfür so ausgebildet, dass über Kapillarkräfte geringe Mengen des Solarfluids 5 über eine Leitungsverbindung 12 aus dem Hohlraum 4 in den Hohlraum 6c eingeführt werden können. Der Kollektorboden 3 kann analog zu dem Kollektorboden 3 gemäß Fig. 1 und Fig. 2 ausgebildet sein. Die Leitungsverbindung 12 umfasst eine flexible Membran (hier nicht dargestellt), um eine hydraulisch entkoppelte Verbindung zu realisieren. Diese Membran kann Druckverhältnisse der beiden Systeme entsprechend übertragen.

In dem in Fig. 5 dargestellten Zustand (entleerter Zustand oder auch "AUS") befindet sich kein Solarfluid 5 in dem Hohlraum 4. Die Solarstrahlung wird durch die Reflexionsschicht 10 reflektiert, so dass der Solarkollektor 1' nicht wesentlich erwärmt wird.

In dem in Fig. 6 dargestellten Zustand (gefüllter Zustand oder auch "EIN") wird der Solarkollektor 1' von einem Solarfluid 5 durchströmt. Dabei entsteht an der Leitungsverbindung 12 ein Unterdruck, so dass im Zusammenwirken mit den Kapillarkräften das Solarfluid 5 in den Hohlraum 4 angezogen wird und der Hohlraum 4 mit Solarfluid 5 ausgefüllt wird. Die einfallende Solarstrahlung S wird in diesem Solarfluid 5 in dem Hohlraum 6c absorbiert. Die dabei entstehende Wärme wird über Wärmeleitung über das Solarfluid 5 in die Solaranlage 20 transportiert. Bei einem Ausschalten oder einem Ausfall der Pumpeneinheit 22 fließt das Solarfluid 5 aus dem Solarkollektor 1' und die Solaranlage 20 befindet sich in dem Betriebsmodus AUS. In diesem Zustand wird die einfallende Solarstrahlung S von dem Solarkollektor 1' im Wesentlichen reflektiert, ohne dass im Wesentlichen Wärme in dem Solarkollektor 1' erzeugt wird.

## Patentansprüche

1. Solarkollektor (1, 1'), insbesondere ein thermischer Solarkollektor, zum Erwärmen eines den Solarkollektor (1, 1') durchströmenden Solarfluids (5), mit mindestens einer Solarstrahlungsdurchtrittseinrichtung (2), einer Kollektorbodeneinheit (3) und mindestens einem zwischen Solarstrahlungsdurchtrittseinrichtung (2) und Kollektorbodeneinheit (3) angeordneten Hohlraum (4, 6c), der von dem Solarfluid (5) durchströmbar ist und in welchen Solarstrahlung (S) durch die Solarstrahlungsdurchtrittseinrichtung (2) durchtreten und das Solarfluid (5) erwärmen kann, wobei der Hohlraum (4, 6c) je nach Anwendungsfall über eine Zuflusseinrichtung (22) zumindest teilweise von dem Solarfluid (5) durchströmbar ist oder frei von Solarfluid (5) ist und so ein Füllstand des Solarfluids (5) in dem Hohlraum (4, 6c) definiert ist,
**dadurch gekennzeichnet, dass** Temperaturbegrenzungsmittel für eine Begrenzung einer Betriebstemperatur des Solarkollektors (1, 1') und/oder des Solarfluids (5) vorgesehen sind, wobei die Temperaturbegrenzungsmittel direkt mit dem Füllstand des mindestens einen Hohlraums (4, 6c) gekoppelt sind.

2. Solarkollektor (1, 1') nach Anspruch 1,
**dadurch gekennzeichnet, dass** die Temperaturbegrenzungsmittel mindestens eine Reflexionsschicht (10) umfassen, um nicht benötigte Solarstrahlung (S) aus dem Solarkollektor (1, 1') zu reflektieren.

3. Solarkollektor (1, 1') nach den Ansprüchen 1 oder 2,
**dadurch gekennzeichnet, dass** die Reflexionsschicht (10) in eine Einfallsrichtung der Solarstrahlung (S) hinter dem Hohlraum (4) benachbart dazu angeordnet ist, um die Solarstrahlung (S) in Abhängigkeit von dem Füllstand des Hohlraums (4, 6c) unterschiedlich stark zu reflektieren.

4. Solarkollektor (1, 1') nach einem der Ansprüche 1 bis 3,
**dadurch gekennzeichnet, dass** die Solarstrahlungsdurchtrittseinrichtung (2) mindestens eine Solardurchtrittsschicht (6a, 8) umfasst, welche für Solarstrahlung (S) im Wesentlichen durchlässig ist, um eine Solarstrahlung (S) in die Einfallsrichtung der Solarstrahlung (S) durchzulassen.

5. Solarkollektor (1, 1') nach einem der Ansprüche 1 bis 4,
**dadurch gekennzeichnet, dass** die Solarstrahlungsdurchtrittseinrichtung (2) mindestens eine wärmeundurchlässige Schicht (9) umfasst, welche für eine Wärmestrahlung im Wesentlichen undurchlässig ist, um die Wärmestrahlung, welche beim Erwärmen des Solarfluids (5) entstehen kann, im Wesentlichen nicht aus dem Solarkollektor (1, 1') zu lassen.

6. Solarkollektor (1, 1') nach einem der Ansprüche 1 bis 5,
**dadurch gekennzeichnet, dass** die Temperaturbegrenzungsmittel mindestens einen von einem Solarfluid (5) durchströmbaren zweiten Hohlraum (4, 6c) in der Solarstrahlungsdurchtrittseinrichtung (2) umfassen, welcher zwischen der Solardurchtrittsschicht (6a,8) und der wärmeundurchlässigen Schicht (9) angeordnet ist, so dass abhängig von einem Füllstand des zweiten Hohlraums (6c) die einfallende Solarstrahlung (S) unterschiedlich stark reflektiert wird.

7. Solarkollektor (1, 1') nach einem der Ansprüche 1 bis 6,
**dadurch gekennzeichnet, dass** der zweite Hohlraum (6c) mit dem ersten Hohlraum (4) fluidisch verbindbar ist.

8. Solarkollektor (1, 1') nach einem der Ansprüche 1 bis 5,
**dadurch gekennzeichnet, dass** die Temperaturbegrenzungsmittel mindestens einen mit einer zweiten Flüssigkeit befüllbaren zweiten Hohlraum (6c) in der Solarstrahlungsdurchtrittseinrichtung (2) umfassen, welcher zwischen der Solardurchtrittsschicht (6a, 8) und der wärmeundurchlässigen Schicht (9) angeordnet und fluidisch unabhängig vom ersten Hohlraum (4) ist, so dass abhängig von einem Füllstand des zweiten Hohlraums (6c) die einfallende Solarstrahlung (S) unterschiedlich stark reflektiert wird.

9. Solarkollektor (1, 1') nach einem der Ansprüche 1 bis 5 oder 8,
**dadurch gekennzeichnet, dass** die zweite Flüssigkeit in einem kleinen, in den Solarkollektor integrierten Speicher gelagert ist, welcher mit dem zweiten Hohlraum (6c) verbindbar und im unteren Bereich des Solarkollektors (1, 1') angeordnet ist.

10. Solarkollektor (1, 1') nach einem der Ansprüche 1 bis 5, 8 oder 9,
**dadurch gekennzeichnet, dass** beim Fördern des Solarfluids (5) durch den ersten Hohlraum (4) auch die zweite Flüssigkeit aus dem Speicher austritt und den zweiten Hohlraum (6c) füllt.

11. Solarkollektor (1, 1') nach einem der Ansprüche 1 bis 5, 8, 9 oder 10,
**dadurch gekennzeichnet, dass** das Austreten der zweiten Flüssigkeit aus dem Speicher und das Füllen des zweiten Hohlraumes (6c) durch die Druckdifferenz beim Fördern des Solarfluids (5) durch den ersten Hohlraum (4), durch Kapillarwirkung im zweiten Hohlraum (6c) und/oder mit Hilfe einer Pumpe erfolgt.

12. Solarkollektor (1, 1') nach einem der Ansprüche 1 bis 11,
**dadurch gekennzeichnet, dass** die Schichten (6a, 8, 9) so angeordnet sind, dass bei niedrigerem Füllstand mindestens eines Hohlraums (4, 6c) mehr Solarstrahlung (S) durch die mindestens eine Reflexionsschicht (10) reflektiert und weniger Wärmestrahlung durch das Solarfluid (5) absorbiert wird, als bei einem höheren Füllstand des entsprechenden Hohlraums (4, 6c).

13. Solaranlage (20) mit einem Solarkollektor (1, 1') nach einem der vorherigen Ansprüche 1 bis 12, einem mit dem Hohlraum (4, 6c) fluidisch verbundenem Leitungssystem (21), einem mit dem Leitungssystem (21) verbundenen Speicher (23) und einer Zuflusseinrichtung (22), um ein Solarfluid (5) entsprechend aus dem Solarkollektor (1, 1'), durch das Leitungssystem (21) und/oder in den Speicher (23) und umgekehrt zu fördern.

14. Solaranlage (20) nach einem der Ansprüche 1 bis 7, 12 und 13,
**dadurch gekennzeichnet, dass** die Solaranlage (20) ausgebildet ist, um ein Drain-Back-Verfahren und eine Temperaturbegrenzung, insbesondere ohne Einsatz elektrischer Energie, durchzuführen.
